# EUROPEAN PATENT SPECIFICATION

(11) **EP 1 256 279 B1**
(45) Date of publication and mention of the grant of the patent: **23.11.2005**
(21) Application number: 02008278.0
(22) Date of filing: 22.04.2002
(51) Int. Cl.: A21C 3/06

(54) **Line for processing rolled-up food products, particularly for producing croissants**
Verarbeitungsstrecke für aufgerollte Nahrungsmittel, insbesondere zur Herstellung von Hörnchen
Ligne de traitement de produits alimentaires enroulés, notamment pour la fabrication de croissants

(30) Priority: 10.05.2001 IT VR20010057
(43) Date of publication of application: 13.11.2002
(73) Proprietor: Doge Food Processing Machinery S.r.l., 36015 Schio (Vicenza) (IT)
(72) Inventor: Bertini, Angelo, 20125 Rho, (prov. of Milano) (IT)
(74) Representative: Modiano, Micaela Nadia

(56) References cited:
- EP-A- 0 327 856
- EP-A- 0 360 498
- EP-A- 0 454 202
- EP-A- 0 551 177
- EP-A- 0 663 150
- EP-A- 0 962 141
- EP-A- 1 135 985
- WO-A-01/41574
- DE-A- 4 402 346
- DE-U- 7 118 199
- GB-A- 1 466 314
- GB-A- 2 276 845
- US-A- 3 704 664
- US-A- 4 438 145

## Description

The present invention relates to a line for processing food products, particularly for producmg croissants as known from EP-A-663150 from which the preamble of claim 1 is derived.

Currently, industrial facilities for producing bakery products, such as for example croissants, use, in order to roll up the dough, static means that generally act as barriers for slowing the ribbon or, in the specific case, the shapes of dough that are advancing, thus causing them to roll up.

A widely used example of said static means is a portion of a flexible lamina or metallic net arranged above the belt that conveys the dough cut to size.

In the case of croissant production lines, the dough is cut into triangular shapes, which are orientated so that their base faces the advancement direction, are conveyed by a continuously moving belt, and are forced to touch, in an upward region, the portion of flexible lamina or metallic net, thus triggering the rolling-up action.

Although this rolling-up system is apparently simple, it is not devoid of drawbacks.

Such system does not ensure the ideal conditions for correct and most of all uniform rolling-up, which is essential in the case of industrial productions.

Moreover, in the production of croissants and other filled products, if a single already-filled triangle is not rolled up correctly and completely, this creates the conditions for the immediate jamming of the devices downstream of the line and for dirtying them, consequently entailing the need to stop the machines in order to be able to perform cleaning and restoring operations.

Additionally, such rolling-up system, being static, cannot be adjusted according to variations in the characteristics of the ribbon of dough being processed.

In recent times, mechanical devices with a dynamic effect for rolling up dough have been proposed.

These devices are generally formed by disks or rotors that rotate in the opposite direction with respect to the advancement of the ribbon of dough and are arranged, like the previously described static means, above the ribbon.

Such "dynamic" devices, therefore combine the advancement of the dough determined by the conveyor belt with the motion of the contrarotating disk or rotor.

Although these devices are on average more effective than static means, they have drawbacks, linked most of all to limitations in the adjustment of the angle of engagement between the ribbon of dough and the rotor; accordingly, this difficulty does not allow to set the device correctly by taking into account different characteristics of the ribbons or shapes of dough, such as for example thickness and consistency.

Moreover, by using the above described devices it is not possible to give the product a shape that is elongated enough to allow correct development of the product during baking.

The aim of the present invention is to provide a line for processing food products that allows to eliminate or reduce drastically the above noted drawbacks.

Within this aim, an object of the invention is to provide a rolling-up device that allows to obtain a differentiated compression of the products.

Another object of the invention is to ensure the obtainment of croissants with tapering points and an elongated body, so as to facilitate their rising and baking.

Another object of invention is to provide a plant that stands out in terms of efficiency and reliability.

This aim and these and other objects that will become better apparent hereinafter are achieved by a line for processing food products, particularly for obtaining croissants, which comprises at least one device for cutting at least one ribbon of dough into suitable shapes, at least one device for positioning and aligning said shapes, and at least one belt for conveying said shapes, characterized in that it comprises a rolling-up station which has means for diverting said shapes, said means being arranged at a gap of said at least one conveyor belt and being adapted to perform a movement between an inactive or disengagement position and an active or engagement position with respect to the edge of said shapes that faces the advancement direction of said conveyor belt in order to initiate the rolling-up of said shapes, and a rolling-up device which acts cooperatively in succession to said diverting means, is arranged above said conveyor belt, and is adapted to perform a downward stroke in order to complete said rolling-up of said shapes.

These objects are solved by a line with the features of the characterising portion of claim 1.

Further characteristics and advantages of the present invention will become better apparent from the following detailed description of some embodiments thereof, given only by way of non-limitative example with reference to the accompanying drawings, wherein:
Figure 1 is a perspective view of a rolling-up device according to the invention;
Figure 2 is a top view of a spreading element;
Figure 3 is a sectional view, taken along the line III-III of Figure 2, of a spreading element according to the invention;
Figure 4 is a diagram of the production of a croissant; and
Figure 5 is a side elevation view of a portion of a processing line.

With reference to the figures, a line for processing food products, particularly for producing croissants, comprises at least one cutting device.

In general, a cutting device comprises a first cutting and spacing element, which is designed to divide a ribbon of dough into a plurality of strips of a given width according to the dimensions and geometric characteristics of the final product.

In the case of croissant production plants, production lines have a second cutting device, which is suitable to divide the respective strips of dough into suitable shapes 2, for example triangles (if croissants are produced): said device can be obtained by using, for example, a cutting system with oblique blades.

Generally, downstream of said device there is an element for spacing and aligning the shapes 2, which are triangular in the case of croissants; in particular, said spacing element allows to orientate the triangles of dough so that their base 2a faces the advancement direction of a conveyor belt 3, which is used to move the shapes 2.

The processing line has a rolling-up station 5.

In particular, the rolling-up station 5 has diverting means 5a, which are located at a gap 4 of the conveyor belt 3, and a rolling-up device 5b.

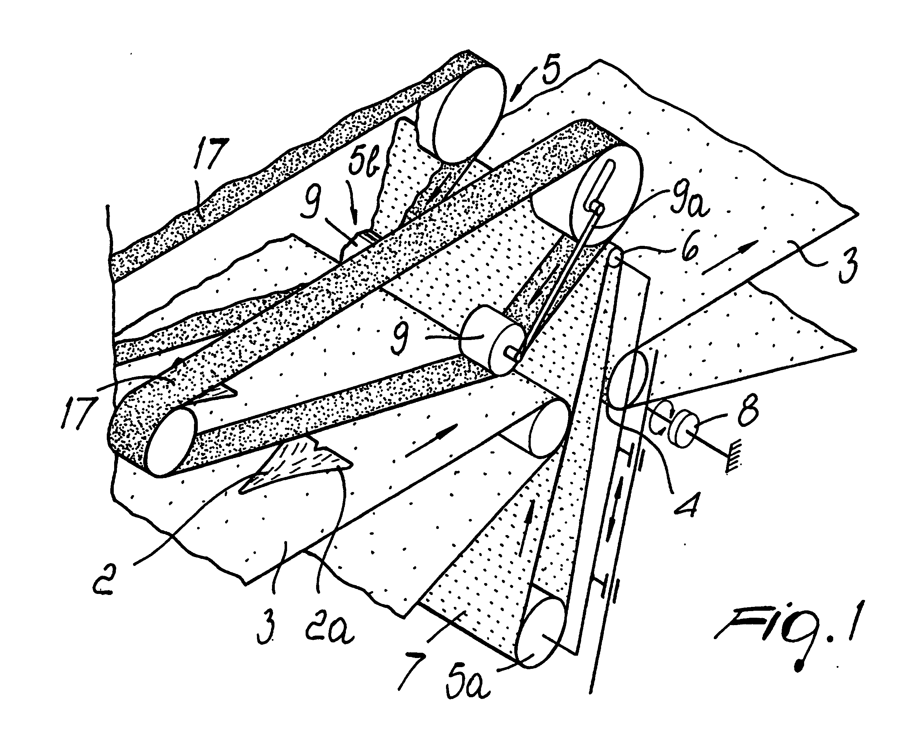

As shown more clearly in Figure 1, the diverting means 5a are meant to move between an inactive or disengaged position and an active or engaged position with respect to the edge 2a, which in the case of triangular shapes 2 is constituted by the base of the triangle.

When the diverting means 5a are in the disengaged position, the end 6 that during use is the upper end of said means lies below the plane of arrangement of the conveyor belt 3, thus allowing the dough shape (which is partially or completely rolled up) to cross the gap 4.

In particular, the diverting means 5a are constituted by a diverting belt 7, made of a material suitable for food use, which is connected to means 8 for adjusting the inclination of the diverting belt 7 with respect to the plane of arrangement of the conveyor belt 3.

The rolling-up station 5 further has a rolling-up device 5b:
advantageously, the device 5b is constituted by at least one belt 17, or by an equivalent element such as, for example, a cord, which is arranged during use above the conveyor belt 3, upstream of the gap 4.

The rolling-up device 5b is meant to perform, by acting cooperatively after the diverting means 5a (and in particular following the passage of the diverting means 5a from the disengaged position to the engaged position), a downward stroke in order to engage the shape 2.

Conveniently, the portion of the belt 17 that is designed to engage the shape 2 has an advancement direction that is opposite to the advancement direction of the conveyor belt 3, so as to facilitate completion of the rolling-up of the shape 2.

If one wishes to perform a differentiated compression of the dough shape (for example by pressing less at the central portion), it is possible to use, as a rolling-up device 5b, a plurality of belts 17 (or cords) which are arranged side by side and are designed to perform different downward strokes; in this regard, the belt 17 adapted to engage a central portion of the dough shape can perform a smaller downward stroke than the belts 17 meant to engage portions located at the ends of said dough shape 2.

This solution is highly useful if one wishes to produce for example filled croissants.

The rolling-up device 5 can be provided with one or more pushers 9 (such as, for example, free rollers), which are meant to directly cause, by way of a respective downward stroke by means of devices 9a, the movement of the belt or belts 17.

The diverting means 5a can be detachably coupled to the processing line: in this manner it is possible to adjust beforehand the inclination of the diverting means 5a (particularly of the diverting belt 7) according to the characteristics of the dough shapes used.

Further, in order to optimize rolling-up, the rolling-up device 5b also is detachably coupled to the line 1.

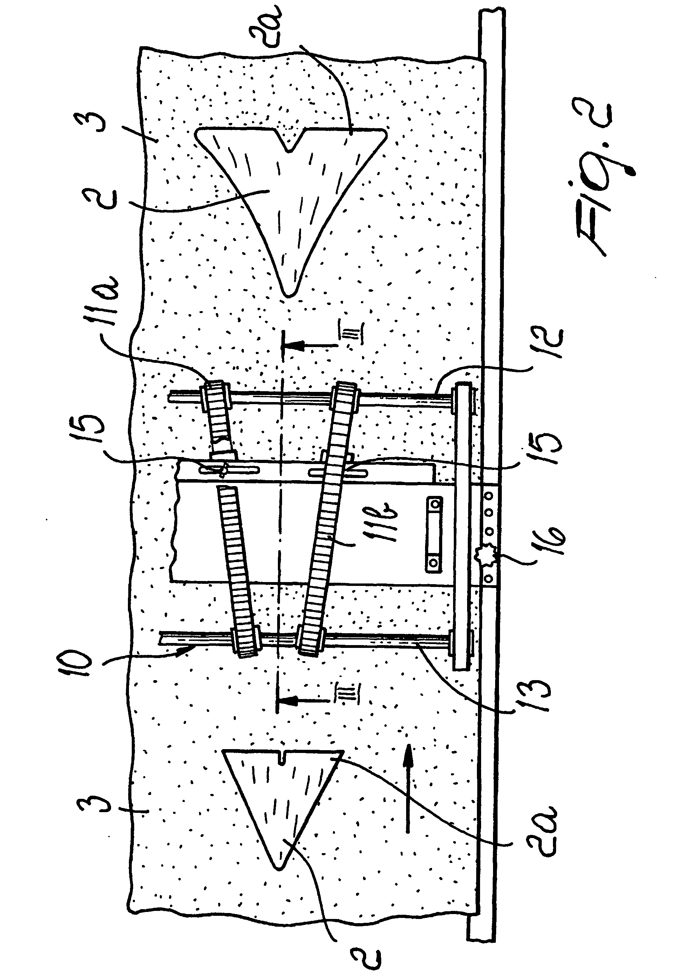

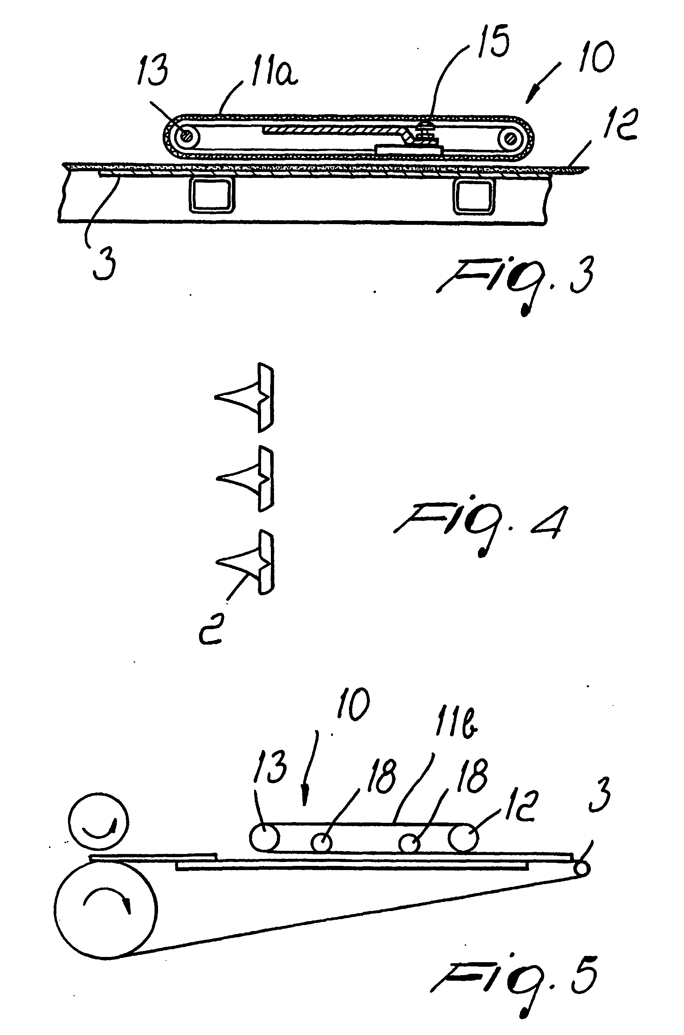

A line 1 for processing food products according to the invention is further provided with spreading means 10, as shown more clearly in Figures 2 and 3.

The spreading means 10 are preferably constituted by two mutually diverging bands 11a and 11b, which are rigidly coupled, at their ends, to two movement shafts 12 and 13.

The respective surfaces that during use face the conveyor belt 3 are meant to engage the surface of the dough shapes 2.

Advantageously, the spreading means 10 have means 15 for setting the angle of divergence between the pair of diverging bands or belts 11a and 11b.

Moreover, the linear speed of the bands or belts 11a and 11b is substantially equal to the advancement speed of the conveyor belt 3 and accordingly of the dough shapes 2.

Also the spreading means 10 have coupling means 16 in order to be detachably coupled to the processing line 1.

Conveniently, the spreading means 10, as shown more clearly in Figure 5, can provide for the presence of one or more gauging rollers 18, whose rotation axis is arranged substantially transversely to the conveyor belt 3.

In particular, as shown in figure 5, the means 10 can be provided with two rollers 18, advantageously of the free type, which are spaced along the shape advancement direction and whose distance from the conveyor belt 3, and therefore from the shapes 2, can be set by the user by acting on spacer means, which are not shown in the figures.

Advantageously, the rollers 18 lie between the two mutually diverging bands 11a and 11b, so as to apply the intended pressure to the portion of the shape 2 that is not in contact with the bands 11a and 11b.

The use of the processing line according to the invention is as follows.

Starting from strips of dough of suitable width, by means of a cutting device, for example of the rotary type with oblique blades or in any case of an equivalent type, dough shapes 2 are obtained; in the case of croissants, such shapes are triangular, with the base or edge 2a facing the advancement direction of the conveyor belt 3.

Conveniently, at the centerline of the base 2a, an incision that is substantially parallel to the advancement direction of the shapes 2 is produced by means of a notch cutting element.

The edge 2a of the shapes 2 conveyed by the conveyor belt 3 engages, at a gap 4, the diverting means 5a, which by moving upward allow to initiate the rolling-up of the shapes 2 (the condition of the shapes 2a after this initiation is shown in Figure 4).

While the base or edge 2a of the shapes 2 is moved upward by the diverting means 5a, the belt or belts 7a of the rolling-up device 5b descend and, by advancing in the opposite direction with respect to the conveyor belt 3, cause the complete rolling-up of the shape 2.

In the meantime, the diverting means 5a return to the disengaged or inactive position (with their end 6 below the plane of arrangement of the conveyor belt 3), and therefore the shape 2, which is now fully rolled up, can continue toward the subsequent processing steps.

If the line according to the invention is used, for example, for filled croissants, it is possible to provide a filling station upstream of which the previously described spreading means 10 are located.

The spreading means 10, by also utilizing the incision produced during the cutting step, are meant to divaricate the base 2a of the shape 2 (which is triangular), in order to obtain the tapering ends and produce, at the central portion of the shape 2, the space for containing the filling during rolling-up.

Moreover, the dough shape 2, by making contact with the rollers 18, becomes thinner in its central part and is elongated, consequently making the characteristics of the final product resemble more closely those of products obtained by hand.

It has been found that a processing line according to the invention allows to eliminate, or at least reduce drastically, the drawbacks noted in the lines currently in use.

In particular, the above described line allows, by acting on a plurality of adjustment and setting elements, to obtain the configuration that is most suitable for the type of product to be obtained and to the consistency of the dough being used.

Moreover, by way of the action of the spreading means 10 and of the rolling-up device 5b with differentiated compression, it is possible to produce croissants whose characteristics are absolutely comparable with those of hand-made products.

The above described processing line according to the invention is susceptible of modifications and variations within the scope of the protection defined by the content of the appended claims.

Thus, for example, it is possible to provide a detector for detecting the presence of the shape 2 proximate to the rolling-up station 5, the detector being connected to the diverting means 5a and controlling their passage from a disengaged position to an engaged position, if the presence of a shape 2 is detected on the conveyor belt 3.

The materials and the dimensions may be various according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A line for processing food products, particularly for obtaining croissants, comprising at least one device for cutting at least one ribbon of dough into suitable shapes (2), at least one device for positioning and aligning said shapes (2), and at least one belt (3) for conveying said shapes (2) and a rolling up station (5) **characterized in that** said rolling-up station has means (5a) for diverting said shapes (2), said means (5a) for diverting being arranged at a gap (4) of said at least one conveyor belt (3) and being adapted to perform a movement between an inactive or disengagement position and an active or engagement position with respect to the edge (2a) of said shapes (2) that faces the advancement direction of said conveyor belt (3) in order to initiate the rolling-up of said shapes (2), and a rolling-up device (5b) which acts cooperatively in succession to said diverting means (5a), is arranged above said conveyor belt (3), and is adapted to perform a downward stroke in order to complete said rolling-up of said shapes (2).

2. The processing line according to claim 1, **characterized in that** said rolling-up device (5b) comprises at least one belt (17), the portion of said at least one belt (17) that engages said shape (2) having a direction of advancement that is opposite to the advancement direction of said conveyor belt (3).

3. The processing line according to claims 1 or 2, **characterized in that** said rolling-up station (5) comprises means (8) for adjusting the inclination between said diverting device (5a) and said belt (3) for conveying said shapes (2).

4. The processing line according to any one of the preceding claims, **characterized in that** said rolling-up device (5b) comprises a plurality of belts (17) arranged side by side and suitable to perform respectively a different downward stroke.

5. The processing line according to any one of the preceding claims, **characterized in that** said rolling-up (5b) device comprises at least one element (9) for pushing a respective belt (17) which is meant to perform a downward stroke for the engagement of said respective belt (17) with said shapes (2).

6. The processing line according to any one of the preceding claims, **characterized in that** said pusher (9,9a) element comprises a free roller (9).

7. The processing line according to any one of the preceding claims, **characterized in that** said rolling-up device (5b) can be coupled detachably to said processing line.

8. The processing line according to any one of the preceding claims, **characterized in that** said devices for cutting said ribbon of dough comprise an additional cutting element, which is meant to produce a cut that is substantially perpendicular to said edge (2a) of said dough shape (2) meant to face the direction of advancement of said belt (3) for conveying said shapes (2).

9. The processing line according to any one of the preceding claims, **characterized in that** it comprises a detector for detecting the presence of the shape (2) proximate to said rolling-up station (5), said detector being meant to give an impulse to said diverting means (5a) in order to pass from an inactive or disengaged position to an active or engaged position.

10. The processing line according to any one of the preceding claims, **characterized in that** it comprises spreading means (10) which are arranged, during use, above said conveyor belt (3) with respect to said dough shapes (2) and upstream of said rolling-up station (5), said spreading means (10) having at least one pair of bands (11a,11b) which mutually diverge in the direction of advancement of said conveyor belt (3), have the same direction of rotation as said conveyor belt (3) and are meant to engage the surface of said dough shapes (2) that is the upper surface during use.

11. The processing line according to any one of the preceding claims, **characterized in that** said spreading means (10) comprise means (15) for adjusting the distance between said bands (11a, 11b) and said conveyor belt (3).

12. The processing line according to any one of the preceding claims, **characterized in that** said spreading means (10) comprise means for setting the divergence of said mutually diverging bands (11a,11b).

13. The processing line according to any one of the preceding claims, **characterized in that** said mutually diverging bands (11a,11b) have a peripheral speed that is substantially equal to the advancement speed of said conveyor belt (3).

14. The processing line according to any one of the preceding claims,
**characterized in that** said spreading means (10) comprise at least one gauging roller (18) whose rotation axis is arranged transversely to said conveyor belt (3), said gauging roller (18) being arranged on the opposite side with respect to a portion of said mutually diverging bands (11a,11b) that engages said shapes (2) and being suitable to apply pressure between said shapes (2) and a portion of said ands (11a,11b).

15. The processing line according to any one of the preceding claims, **characterized in that** said spreading means comprise two gauging rollers (18) which are spaced along the advancement direction of said dough shapes (2).

16. The processing line according to any one of the preceding claims, **characterized in that** said at least one gauging roller (18) has means for setting the distance between said rotation axis and said shapes (2).

17. The processing line according to any one of the preceding claims, **characterized in that** said at least one gauging roller (18) rotates freely.

## Patentansprüche

1. Linie zum Verarbeiten von Nahrungsmittelprodukten, insbesondere zum Erhalten von Croissants, mit mindestens einer Vorrichtung zum Schneiden mindestens eines Teigbandes in geeignete Formen (2), mindestens einer Vorrichtung zum Positionieren und Ausrichten der Formen (2) und mindestens einem Band (3) zum Befördern der Formen (2) und einer Aufrollstation (5), **dadurch gekennzeichnet, daß** die Aufrollstation eine Einrichtung (5a) zum Umlenken der Formen (2) aufweist, wobei die Einrichtung (5a) zum Umlenken in einem Spalt (4) des mindestens einen Förderbandes (3) angeordnet ist und dazu ausgelegt ist, eine Bewegung zwischen einer inaktiven oder Löseposition und einer aktiven oder Eingriffsposition in Bezug auf die Kante (2a) der Formen (2) durchzuführen, die der Vorschubrichtung des Förderbandes (3) zugewandt ist, um das Aufrollen der Formen (2) einzuleiten, und eine Aufrollvorrichtung (5b), die mitwirkend nach der Umlenkeinrichtung (5a) wirkt, über dem Förderband (3) angeordnet ist und dazu ausgelegt ist, einen Abwärtshub durchzuführen, um das Aufrollen der Formen (2) durchzuführen.

2. Verarbeitungslinie nach Anspruch 1, **dadurch gekennzeichnet, daß** die Aufrollvorrichtung (5b) mindestens ein Band (17) umfaßt, wobei der Teil des mindestens einen Bandes (17), der mit der Form (2) in Eingriff kommt, eine Vorschubrichtung aufweist, die zur Vorschubrichtung des Förderbandes (3) entgegengesetzt ist.

3. Verarbeitungslinie nach den Ansprüchen 1 oder 2, **dadurch gekennzeichnet, daß** die Aufrollstation (5) eine Einrichtung (8) zum Einstellen der Neigung zwischen der Umlenkvorrichtung (5a) und dem Band (3) zum Befördern der Formen (2) umfaßt.

4. Verarbeitungslinie nach einem der vorangehenden Ansprüche, **dadurch gekennzeichnet, daß** die Aufrollvorrichtung (5b) eine Vielzahl von Bändern (17) umfaßt, die nebeneinander angeordnet sind und geeignet sind, um jeweils einen anderen Abwärtshub durchzuführen.

5. Verarbeitungslinie nach einem der vorangehenden Ansprüche, **dadurch gekennzeichnet, daß** die Aufrollvorrichtung (5b) mindestens ein Element (9, 9a) zum Schieben eines jeweiligen Bandes (17), das einen Abwärtshub für den Eingriff des jeweiligen Bandes (17) mit den Formen (2) durchführen soll, umfaßt.

6. Verarbeitungslinie nach einem der vorangehenden Ansprüche, **dadurch gekennzeichnet, daß** das Schubelement (9, 9a) eine freie Walze (9) umfaßt.

7. Verarbeitungslinie nach einem der vorangehenden Ansprüche, **dadurch gekennzeichnet, daß** die Aufrollvorrichtung (5b) lösbar mit der Verarbeitungslinie gekoppelt werden kann.

8. Verarbeitungslinie nach einem der vorangehenden Ansprüche, **dadurch gekennzeichnet, daß** die Vorrichtungen zum Schneiden des Teigbandes ein zusätzliches Schneidelement umfassen, das einen Schnitt erzeugen soll, der zur Kante (2a) der Teigform (2), die der Vorschubrichtung des Bandes (3) zum Befördern der Formen (2) zugewandt sein soll, im wesentlichen senkrecht ist.

9. Verarbeitungslinie nach einem der vorangehenden Ansprüche, **dadurch gekennzeichnet, daß** sie einen Detektor zum Erfassen der Anwesenheit der Form (2) nahe der Aufrollstation (5) umfaßt, wobei der Detektor einen Impuls an die Umlenkeinrichtung (5a) geben soll, um sie von einer inaktiven oder gelösten Position in eine aktive oder in Eingriff stehende Position zu überführen.

10. Verarbeitungslinie nach einem der vorangehenden Ansprüche, **dadurch gekennzeichnet, daß** sie eine Ausbreitungseinrichtung (10) umfaßt, die während der Verwendung über dem Förderband (3) in Bezug auf die Teigformen (2) und stromaufwärts von der Aufrollstation (5) angeordnet ist, wobei die Ausbreitungseinrichtung (10) mindestens ein Paar von Bändern (11a, 11b) aufweist, die in der Vorschubrichtung des Förderbandes (3) auseinanderlaufen, dieselbe Drehrichtung aufweisen wie das Förderband (3) und mit der Oberfläche der Teigformen (2), das heißt während der Verwendung der oberen Oberfläche, in Eingriff kommen sollen.

11. Verarbeitungslinie nach einem der vorangehenden Ansprüche, **dadurch gekennzeichnet, daß** die Ausbreitungseinrichtung (10) eine Einrichtung (15) zum Einstellen des Abstandes zwischen den Bändern (11a, 11b) und dem Förderband (3) umfaßt.

12. Verarbeitungslinie nach einem der vorangehenden Ansprüche, **dadurch gekennzeichnet, daß** die Ausbreitungseinrichtung (10) eine Einrichtung zum Einstellen des Auseinanderlaufens der auseinanderlaufenden Bänder (11a, 11b) umfaßt.

13. Verarbeitungslinie nach einem der vorangehenden Ansprüche, **dadurch gekennzeichnet, daß** die auseinanderlaufenden Bänder (11a, 11b) eine Umfangsgeschwindigkeit aufweisen, die im wesentlichen gleich der Vorschubgeschwindigkeit des Förderbandes (3) ist.

14. Verarbeitungslinie nach einem der vorangehenden Ansprüche, **dadurch gekennzeichnet, daß** die Ausbreitungseinrichtung (10) mindestens eine Kalibrierwalze (18) umfaßt, deren Drehachse quer zum Förderband (3) angeordnet ist, wobei die Kalibrierwalze (18) auf der entgegengesetzten Seite bezüglich eines Teils der auseinanderlaufenden Bänder (11a, 11b) angeordnet ist, der mit den Formen (2) in Eingriff kommt, und geeignet ist, um einen Druck zwischen den Formen (2) und einem Teil der Bänder (11a, 11b) aufzubringen.

15. Verarbeitungslinie nach einem der vorangehenden Ansprüche, **dadurch gekennzeichnet, daß** die Ausbreitungseinrichtung zwei Kalibrierwalzen (18) umfaßt, die entlang der Vorschubrichtung der Teigformen (2) beabstandet sind.

16. Verarbeitungslinie nach einem der vorangehenden Ansprüche, **dadurch gekennzeichnet, daß** die mindestens eine Kalibrierwalze (18) eine Einrichtung zum Einstellen des Abstandes zwischen der Drehachse und den Formen (2) aufweist.

17. Verarbeitungslinie nach einem der vorangehenden Ansprüche, **dadurch gekennzeichnet, daß** sich die mindestens eine Kalibrierwalze (18) frei dreht.

## Revendications

1. Ligne de traitement pour des produits alimentaires, particulièrement pour obtenir des croissants, comprenant au moins un dispositif pour couper au moins un ruban de pâte selon des formes (2) appropriées, au moins un dispositif pour positionner et aligner lesdites formes (2) et au moins un tapis (3) pour transporter lesdites formes (2) et une station (5) d'enroulement, **caractérisée en ce que** ladite station (5) d'enroulement a un moyen (5a) pour détourner lesdites formes (2), ledit moyen (5a) pour détourner étant agencé au niveau d'un espace vide (4) dudit au moins un tapis (3) de transport et étant adapté pour réaliser un mouvement entre une position inactive ou déclenchée et une position active ou enclenchée par rapport au bord (2a) desdites formes (2) qui font face à la direction de progression dudit tapis (3) de transport afin d'initier l'enroulement desdites formes (2) et un dispositif (5b) d'enroulement qui agit en coopération à la suite dudit moyen (5a) de détournement, est agencé au-dessus dudit tapis (3) de transport, et est adapté pour réaliser une course vers le bas afin d'achever ledit enroulement desdites formes (2).

2. Ligne de traitement selon la revendication 1, **caractérisée en ce que** ledit dispositif (5b) d'enroulement comprend au moins un tapis (17), la partie dudit au moins un tapis (17) qui s'enclenche par rapport à ladite forme (2) ayant une direction de progression qui est opposée à la direction de progression dudit tapis (3) de transport.

3. Ligne de traitement selon la revendication 1 ou 2, **caractérisée en ce que** ladite station (5) d'enroulement comprend un moyen (8) pour régler l'inclinaison entre ledit dispositif (5a) de détournement et ledit tapis (3) pour transporter lesdites formes (2).

4. Ligne de traitement selon l'une quelconque des revendications précédentes, **caractérisée en ce que** ledit dispositif (5b) d'enroulement comprend une pluralité de tapis (17) agencés côte à côte et approprié pour réaliser respectivement une course différente vers le bas.

5. Ligne de traitement selon l'une quelconque des revendications précédentes, **caractérisée en ce que** ledit dispositif (5b) d'enroulement comprend au moins un organe (9, 9a) pour pousser un tapis (17) respectif qui est destiné à réaliser une course vers le bas pour l'enclenchement dudit tapis (17) respectif avec lesdites formes (2).

6. Ligne de traitement selon l'une quelconque des revendications précédentes, **caractérisée en ce que** ledit organe (9, 9a) pousseur comprend un rouleau (9) libre.

7. Ligne de traitement selon l'une quelconque des revendications précédentes, **caractérisée en ce que** ledit dispositif (5b) d'enroulement peut être couplé de manière détachable à ladite ligne de traitement.

8. Ligne de traitement selon l'une quelconque des revendications précédentes, **caractérisée en ce que** lesdits dispositifs pour couper ledit ruban de pâte comprennent un organe de coupage supplémentaire, qui est destiné à produire une coupe qui est sensiblement perpendiculaire audit bord (2a) de ladite forme (2) de pâte destiné à faire face à la direction de progression dudit tapis (3) pour transporter lesdites formes (2).

9. Ligne de traitement selon l'une quelconque des revendications précédentes, **caractérisée en ce qu'**elle comprend un détecteur pour détecter la présence de la forme (2) à proximité de ladite station (5) d'enroulement, ledit détecteur étant destiné à donner une impulsion audit moyen (5a) de détournement afin de faire passer d'une position inactive ou déclenchée à une position active ou enclenchée.

10. Ligne de traitement selon l'une quelconque des revendications précédentes, **caractérisée en ce qu'**elle comprend un moyen (10) d'étalement qui est agencé, en cours d'utilisation, au-dessus dudit tapis (3) de transport par rapport auxdites formes (2) de pâte et en amont de ladite station (5) d'enroulement, ledit moyen (10) d'étalement ayant au moins une paire de bandes (11a, 11b) qui divergent mutuellement dans la direction de progression dudit tapis (3) de transport, ont la même direction de rotation que ledit tapis (3) de transport et sont destinées à s'enclencher avec la surface desdites formes (2) de pâte qui est la surface supérieure en cours d'utilisation.

11. Ligne de traitement selon l'une quelconque des revendications précédentes, **caractérisée en ce que** ledit moyen (10) d'étalement comprend un moyen (15) pour régler la distance entre lesdites bandes (11a, 11b) et ledit tapis (3) de transport.

12. Ligne de traitement selon l'une quelconque des revendications précédentes, **caractérisée en ce que** ledit moyen (10) d'étalement comprend un moyen pour régler la divergence desdites bandes (11a, 11b) mutuellement divergentes.

13. Ligne de traitement selon l'une quelconque des revendications précédentes, **caractérisée en ce que** lesdites bandes (11a, 11b) mutuellement divergentes ont une vitesse périphérique qui est sensiblement égale à la vitesse de progression dudit tapis (3) de transport.

14. Ligne de traitement selon l'une quelconque des revendications précédentes, **caractérisée en ce que** ledit moyen (10) d'étalement comprend au moins un rouleau (18) finisseur dont un axe de rotation est agencé de manière transversale audit tapis (3) de transport, ledit rouleau (18) finisseur étant agencé sur le côté opposé par rapport à une partie desdites bandes (11a, 11b) mutuellement divergentes qui s'enclenchent avec lesdites formes (2) et étant appropriées pour appliquer une pression entre lesdites formes (2) et une partie desdites bandes (11a, 11b).

15. Ligne de traitement selon l'une quelconque des revendications précédentes, **caractérisée en ce que** ledit moyen d'étalement comprend deux rouleaux (18) finisseurs qui sont espacés le long dans la direction de progression desdites formes (2) de pâte.

16. Ligne de traitement selon l'une quelconque des revendications précédentes, **caractérisée en ce que** ledit au moins un rouleau (18) finisseur a un moyen pour régler la distance entre ledit axe de rotation et lesdites formes (2).

17. Ligne de traitement selon l'une quelconque des revendications précédentes, **caractérisée en ce que** ledit au moins un rouleau (18) finisseur effectue une rotation librement.
